Europäisches Patentamt

European Patent Office

Office européen des brevets

(19)

(11) Publication number: **0 119 079**
**B1**

(12) **EUROPEAN PATENT SPECIFICATION**

(45) Date of publication of patent specification: **01.06.88**

(51) Int. Cl.⁴: **B 09 B 3/00**

(21) Application number: **84301605.6**

(22) Date of filing: **09.03.84**

(54) Process for the treatment of industrial residual sludge.

(30) Priority: **15.03.83 ES 520914**

(43) Date of publication of application:
**19.09.84 Bulletin 84/38**

(45) Publication of the grant of the patent:
**01.06.88 Bulletin 88/22**

(84) Designated Contracting States:
**BE DE FR GB IT NL SE**

(56) References cited:
**EP-A-0 068 502**
**DE-A-2 108 827**
**DE-A-2 531 748**
**FR-A-2 129 848**
**FR-A-2 453 688**
**US-A-3 721 183**
**US-A-3 736 277**

(73) Proprietor: **GABINETE INTERNACIONAL CONSULTING S.A.**
**Sabino de Arana, 44**
**Barcelona (ES)**

(72) Inventor: **Ysbern de Arce, Vicente, Dr.**
**Avda. Espasa, 3**
**08034 - Barcelona (ES)**
Inventor: **Crosti Soldatti, Giovanni, Dr.**
**Via Buonarroti, 41**
**20145 - Milano (IT)**

(74) Representative: **Allard, Susan Joyce et al**
**BOULT, WADE & TENNANT 27 Furnival Street**
**London EC4A 1PQ (GB)**

Courier Press, Leamington Spa, England.

## Description

This invention relates to a process for treating industrial residual sludges.

More specifically, and always with the possibility of being applicable to other similar applications, the invention relates to a process for treating the sludge which comes from industrial spray-gun painting processes.

As is well known, in the industrial spray-gun painting of fabricated steel items, and especially in the painting of large-sized parts, such as the bodywork of cars, steel furniture, etc., a water curtain for protection is used in front of the back wall of the corresponding painting cabin. This curtain catches the flying particles of paint, drives them down, thus preventing them accumulating on the afore-mentioned wall, or, bouncing back to the worker and thus harming him. Thus, in this process, a suspension of paint particles in water is continuously obtained as a residue, with the corresponding solvent. This mixture is picked up in decanting trays in which the water is separated, the resulting mass being the so-called paint sludge, which contains an appreciable proportion of thermo-setting resins, as well as pigments and mineral fillers.

If it is taken into account that, in general terms, up to fifty per cent of the paint applied by spray-gun is caught and driven down by the water curtain, it is easy to imagine the enormous quantity of painting sludge obtained in the industry. As is logical, this sludge must be removed. For this, the most generally used method consists of discharging it into large waterproofed concrete tanks or containers so as to prevent the seepage of the liquid components, which are later transported to determined removal points. As is logical, this elimination is relatively expensive; at present it is calculated at nine pesetas per kilogram, which obviously represents a direct expense for the industry; and moreover it brings about social costs which, although they are difficult to quantify, turn out both serious and real, given that the use of the container waste areas is adversely affected, both for agriculture and for construction.

Various waste disposal treatments have been disclosed but few are suitable for treating residual sludge from a spray chamber.

DE—A—2 108 827 discloses a processing apparatus for refuse treatment and a process corresponding thereto. The refuse receiving chamber in the apparatus is in the form of a refrigeration chamber with which a press and a comminutor are associated so that the refuse is treated by being frozen, compressed and then fragmented. The process is particularly useful for the treatment of bulky rubbish.

FR—A—2—453 688 discloses a process for using residual sludge originating from the industrial application of thermo-hardenable paints in a spray chamber where the sludge is dewatered and combined with a fibrous material and the combination is then formed into panels which are heat hardened. The present claim 1 is divided into pre-characterising and characterising parts using this document.

This invention aims at a process which allows for the recovery of the solid components of the afore-mentioned sludge, with a view to their future practical use, by eliminating the liquid components present in the sludge. In this way, the social problems and costs which are typical of the classical sludge elimination system mentioned above are completely solved, and the purely economic costs of this elimination are reduced appreciably: they are compensated to a large extent or even completely by the value of the solid components which are recovered and used for later application.

Accordingly, the present invention provides a process for the treatment of industrial residual sludge, especially sludge coming from industrial spray-gun painting processes, which process involves as a first step, if necessary, removing any excess of water-solvent liquid component present in the sludge, to obtain a plastic agglomerate wherein the plastic agglomerate is then divided into blocks of predetermined dimensions, the blocks of sludge are hardened and embrittled by means of freezing, the blocks are mechanically crushed to form particles of predetermined sizes, the acidity or alkalinity of the sludge particles is neutralised, the sludge particles are dried and the polymerization of the resin or resins which form one of the components thereof is completed.

The process of this invention is generally applied to the treatment of sludge from the industrial spray-gun painting process which is between twenty and forty per cent resinoid thermoplastic bonding solids, between fifteen and forty per cent pigments and mineral fillers, and between thirty-five and fifty per cent water and solvents.

In accordance with the process, in the first step, and whenever necessary, the liquid content of the sludge to be treated is reduced until this content is less than twenty per cent. This elimination of liquids can be carried out by means of any known method, although it is preferably carried out by suction, using a suitable device and a suction pump.

The liquid content of the sludge after the first step will vary in accordance with its origins, varying approximately between ten per cent of the total by weight, when coming from an undercoat, and sixteen per cent by weight when coming from a final enamel paint.

It must be pointed out that this first step in carrying out the process is not always essential for putting the same into practice, for in many cases it can be omitted providing, of course, that the liquid content of the sludge to be treated does not reach the upper limit indicated above. Moreover, experience has shown that, starting from any sludge of the type referred to, it is possible to continue with the following steps and objectives of the method, even though the first step of removal of the water-solvent liquid component is omitted.

In the second step of the process, the sludge is taken to a conveyor belt on which, by means of suitable mechanical devices, it is divided into a succession of blocks of pre-determined dimensions. During this step there is also an expulsion of liquid, which is separated from the sludge as a result of the pressure from the belt during the conveying process, and collected by a suitable device.

In the following step of the process, the blocks of sludge which have been prepared in the manner explained above are frozen by means of a freezer or any other method, for example, by means of a cryogenic liquid. This operation takes the time necessary to reduce the actual sludge to a temperature between 50 and 100°C. below zero. This operation is aimed at giving the sludge which has been treated in the manner indicated, the degree of brittleness which will allow it to be broken into small pieces. Experiments carried out have shown that, at a temperature of 30°C. below zero, the sludge is in a suitable state to be broken up in accordance with the requirements of. the procedure.

In the succeeding step, the blocks of sludge which have been treated as described are submitted to a crushing operation in which, for example, a roller crusher is used. During the course of this crushing operation, the roller gap opening must be duly calculated so as to obtain a crushing which is adapted to the required dimensions.

In the following step of the process, and in relation to the degree of residual acidity or alkalinity present in the crushing sludge, the material is submerged, using, for example, suitable trays, in tanks which contain alkaline or acid solutions, respectively, so as to neutralize the sludge.

Finally, in the last step of the process of this invention, the duly treated sludge is put into a drying oven, of any appropriate type, capable of reaching temperatures of from 120 to 220°C, for a time sufficient to guarantee the total drying of the crushed sludge and the complete polymerization of the resin contained in the sludge itself. This thermal treatment will never be prolonged for more than two hours, even if the mass of sludge to be dried is very solid.

The crushed sludge, duly neutralized, dried and with the completely polymerized resin, which is obtained as a final result of the treatment, is capable of numerous practical applications, since it is a granulate, whose particles take on irregular and spongy shapes, their dimensions being exactly adequate for the specific application in each case, and characterized by the fact that they are waterproof. Thus, for example, in a specially recommended application, the above-mentioned granulate, duly spread over farm land, in the correct quantity, will improve the preservation and conditions of the land, favouring the absorption of rain water or irrigation water, and limiting the loss of water due to evaporation by virtue of the waterproof nature of the granulate.

In short, thus, the process of this invention, with relatively modest overall costs, allows the solid components of industrial sludge to be converted into an exploitable material, while the water-solvent liquid components are eliminated by evaporation. In this way, the inconvenience and cost of dumping the mentioned sludge in the environment are completely overcome and the financial costs of this elimination are reduced appreciably, for they are compensated to a large extent, or even completely, by the market value of the material so recovered.

**Claims**

1. Process for the treatment of industrial residual sludge, especially sludge coming from industrial spray-gun painting processes, which process involves as a first step, if necessary, removing any excess of water-solvent liquid component present in the sludge, to obtain a plastic agglomerate, characterised in that the plastic agglomerate is then divided into blocks of pre-determined dimensions, the blocks of sludge are hardened and embrittled by means of freezing, the blocks are mechanically crushed to form particles of predetermined sizes, the acidity or alkalinity of the sludge particles is neutralized, the sludge particles are dried and the polymerization of the resin or resins which form one of the components thereof is completed.

2. A process as claimed in claim 1 further characterised in that the sludge is divided into blocks of pre-determined dimensions during its feeding movement along a conveyor belt.

3. A process as claimed in claim 1 or claim 2 further characterised in that the hardening and embrittlement of the blocks of sludge are carried out by freezing the sludge at a temperature of from 50 to 100°C below zero.

4. A process as claimed in any one of the preceding claims further characterized in that the crushing of the blocks of sludge into particles of a pre-established maximum size is carried out by means of a roller crusher.

5. A process as claimed in any one of the preceding claims further characterised in that the neutralization of the sludge is carried out by immersing the material in an alkaline or acid solution, as required.

6. A process as claimed in any one of the preceding claims further characterised in that the drying of the sludge and the polymerization of the resin is carried out by means of treatment in a drying oven, at temperatures of from 120 to 200°C.

7. A process as claimed in any one of the preceding claims further characterised in that the dimensions of the particles are chosen so as to obtain a granulate capable of being used in agriculture to improve the land, by allowing it to retain and conserve a greater quantity of water.

**Patentansprüche**

1. Verfahren zum Behandeln von Industrieschlamm, insbesondere von Schlamm aus industriellen Farbspritzvorgängen, das als ersten Schritt, falls erforderlich, das Entfernen von überschüssiger, in Schlamm vorhandener Wasser-Lösungsmittel-Flüssigkeitskomponente umfaßt, um ein plastisches Agglomerat zu erhalten, dadurch gekennzeichnet, daß das plastische Agglomerat dann in Blöcke von vorgegebenen Abmessungen zerteilt wird, die Schlammblöcke durch Gefrieren gehärtet und versprödet werden, die Blöcke mechanisch zu Teilchen vorgegebener Größen gebrochen werden, die Acidität oder Alkalinität der Schlammteilchen neutralisiert wird, die Schlammteileichen getrocknet werden und die Polymerisierung des Harzes oder der Harze, die eine von deren Komponenten bilden, zu Ende geführt wird.

2. Verfahren nach Anspruch 1, dadurch gekennzeichnet, daß der Schlamm während seiner Förderung auf einem Bandförderer in Blöcke von vorgegebenen Abmessungen zerteilt wird.

3. Verfahren nach Anspruch 2, dadurch gekennzeichnet, daß das Härten und Verspröden der Schlammblöcke durch Gefrieren des Schlamms bei einer Temperatur von 50 bis 100°C unter Null durchgeführt werden.

4. Verfahren nach einem der vorigen Ansprüche, dadurch gekennzeichnet, daß das Brechen der Schlammblöcke zu Teilchen von vorgegebener Maximalgröße mittels eines Walzenbrechers durchführt wird.

5. Verfahren nach einem der vorigen Ansprüche, dadurch gekennzeichnet, daß die Neutralisierung des Schlamms durch Eintauchen des Materials in eine bedarfsweise alkalische oder saure Lösung erfolgt.

6. Verfahren nach einem der vorigen Ansprüche, dadurch gekennzeichnet, daß das Trocknen des Schlamms und die Polymerisierung des Harzes durch Behandlung in einem Trocknungsofen bei Temperaturen von 120 bis 200°C durchgeführt wird.

7. Verfahren nach einem der vorigen Ansprüche, dadurch gekennzeichnet, daß die Abmessungen der Teilchen so gewählt sind, daß ein Granulat erhalten wird, welches in der Landwirtschaft zur Bodenverbesserung durch Aufnahme und Speicherung einer größeren Wassermenge verwendbar ist.

**Revendications**

1. Un procédé de traitement des boues industrielles résiduaires, en particulier des boues provenant des procédés industriels de peinture au pistolet, ledit procédé comprenant comme première étape, si nécessaire, l'élimination de tout excès de composants liquides eau-solvant présents dans la boue, pour obtenir un aggloméré plastique, caractérisé en ce que l'aggloméré plastique est ensuite divisé en blocs de dimensions prédéterminées, les blocks de boue sont durcis et rendus cassants par congélation, les blocs sont broyés mécaniquement pour former des particules de tailles prédéterminées, l'acidité ou l'alcalinité des particules de boue est neutralisée, les particules de boue sont séchées et la polymérisation de la résine ou des résines qui constituent l'un des composant des particules est complétée.

2. Un procédé selon la revendication 1, caractérisé en outre en ce que la boue est divisée en blocs de dimensions prédéterminées durant son mouvement d'alimentation le long d'une courroie convoyeuse.

3. Un procédé selon la revendication 1 ou 2, caractérisé en outre en ce que le durcissement et la fragilisation des blocs de boue sont conduits par congélation de la boue d'une température de 50 à 100°C à une température inférieure à zéro.

4. Un procédé selon l'une quelconque des revendications précédentes, caractérisé en outre en ce que le broyage des blocs de boue en particules d'une taille maximale prédéterminée est conduit à l'aide d'un broyeur à cylindre.

5. Un procédé selon l'une quelconque des revendications précédentes, caractérisé en outre en ce que la neutralisation de la boue est conduite par immersion du matériau dans une solution alcaline ou acide selon les conditions requises.

6. Un procédé selon l'une quelconque des revendications précédentes, caractérisé en outre en ce que le séchage de la boue et la polymérisation de la résine sont conduits par traitement dans un four de séchage, à des températures de 120 à 200°C.

7. Un procédé selon l'une quelconque des revendications précédentes, caractérisé en outre en ce que les dimensions des particules sont choisies afin d'obtenir un granulé susceptible d'être utilisé dans l'agriculture pour améliorer la terre, en lui permettant de retenir et de conserver une quantité plus grande d'eau.